**Europäisches Patentamt**

**European Patent Office**

**Office européen des brevets**

(19)

(11) Numéro de publication : **0 057 152 B2**

(12) # NOUVEAU FASCICULE DE BREVET EUROPEEN

(45) Date de publication du nouveau fascicule du brevet : **13.03.91 Bulletin 91/11**

(51) Int. Cl.⁵ : **C02F 3/28, C02F 3/10**

(21) Numéro de dépôt : **82400156.4**

(22) Date de dépôt : **28.01.82**

(54) **Fermenteur anaérobie à garnissage.**

(30) Priorité : **28.01.81 FR 8101564**

(43) Date de publication de la demande : **04.08.82 Bulletin 82/31**

(45) Mention de la délivrance du brevet : **26.09.84 Bulletin 84/39**

(45) Mention de la décision concernant l'opposition : **13.03.91 Bulletin 91/11**

(84) Etats contractants désignés : **AT BE CH DE GB IT LI NL SE**

(56) Documents cités :
DE-A- 2 748 313
DE-B- 1 246 610
FR-A- 2 330 652
FR-A- 2 354 292
GB-A- 2 013 170
GB-A- 2 014 555

(56) Documents cités :
**JAPANESE PATENTS REPORT, section CH: Chemical, vol. 80, no. 20, Chem. Engineering, 13-06-1980, Derwent Publications page 5, J8-J LONDRES (GB) abrégé J8-0017633: Flotation solid-liquid sepn. of digested liquor (Sumitomo Jukikai)**
**MEMENTO TECHNIQUE DE L'EAU Degrémont, 1972, PARIS (FR) page 343, tableau de caractéristiques de garnissages en matériaux synthétiques**
**Water Research Vol. 11, pp. 295 á 304, Pergamon Press 1977**
**WLB "Wasser, Luft und Betrieb" 22, 1978, No. 11, pages 573 á 575**
**Brauwelt, Jahrg. 114 (1974) No. 36, pages 772 á 782**
**Chemical Engineering Progress 54 (1), 1958, pages 70 á 75**

(73) Titulaire : **SOCIETE GENERALE POUR LES TECHNIQUES NOUVELLES S.G.N. Société anonyme dite:**
**1, rue des Hérons Montigny-le-Bretonneux F-78184 Saint-Quentin-en-Yvelines Cédex (FR)**

(72) Inventeur : **Vigreux, Bernard**
**48, quai le Gallo**
**F-92100 Boulogne (FR)**

(74) Mandataire : **Combe, André**
**CABINET BEAU DE LOMENIE 55, rue d'Amsterdam**
**F-75008 Paris (FR)**

EP 0 057 152 B2

## Description

Un grand nombre de fermentations de milieux organiques sont des fermentations anaérobies. C'est notamment le cas de la fermentation des eaux croupissantes, qui donne naissance au gaz de marais, c'est-à-dire en fait à du méthane à travers une double fermentation, acidogène puis méthanogène.

Cette fermentation est celle que l'on utilise souvent en aval des traitements biologiques aérobies classiques des eaux-vannes, pour digérer les boues fermentescibles obtenues, afin de les stabiliser. Elle s'applique également bien aux effluents liquides renfermant des polluants organiques concentrés en solution ou en suspension et permet ainsi de réduire de façon importante leur taux de pollution oxydable mesuré selon les critères habituels, DCO et DBO$_5$.

Or, elle permet simultanément de récupérer du gaz méthane utilisable comme combustible ; c'est pourquoi elle est l'objet d'un vif intérêt depuis l'augmentation brutale du coût de l'énergie.

Les systèmes de fermentation anaérobie déjà mis en oeuvre ou actuellement en cours de développement sont des transpositions des solutions existantes de digestion anaérobie des boues fermentescibles des traitements biologiques classiques. L'opération s'effectue dans des cuves fermées permettant d'opérer à l'abri de l'air et dans une gamme de température donnée, éventuellement à l'aide d'un système de réglage convenable.

Il existe des solutions diverses, fermenteurs dits à mélange complet, à un seul étage ou encore comprenant successivement, par le jeu des conditions opératoires, un étage de fermentation acidogène suivi d'une clarification et d'un étage de fermentation méthanogène, et même appareils plus perfectionnés utilisant un lit de boues en suspension.

L'opération a cependant l'inconvénient d'être assez longue, donc d'exiger des installations importantes, et de demander une conduite assez soigneuse, destinée à éviter une fermentation incomplète capable d'engendrer des produits secondaires néfastes ou tout au moins gênants et capables de bloquer le processus.

D'autre part, de nombreux systèmes d'épuration utilisent, pour fixer les bactéries épuratrices, les uns des garnissages à ruissellement, les autres des garnissages noyés. De tels garnissages sont constitués de matériaux ordonnés régulièrement ou empilés aléatoirement de façon à présenter à l'écoulement un taux de passage libre moyen sensiblement uniforme, dont l'importance peut se chiffrer par le pourcentage de vide. L'emploi de matériaux artificiels, en particulier d'anneaux en matières plastiques, permet ainsi d'obtenir, avec une maille de l'ordre du centimètre au moins, un pourcentage de vide supérieur à 90% et, cependant, une surface spécifique utile au support des boues supérieure à 80 m²/m³. On a d'ailleurs proposé, pour améliorer leurs performances, de déplacer périodiquement le lit en lui imposant mécaniquement ou de préférence sous l'effet d'une mise en circulation du liquide un brassage périodique ou continu qui évite le colmatage et, le cas échéant, permet d'aérer régulièrement le garnissage. Pour minimiser la consommation d'énergie, on utilise alors avantageusement un garnissage constitué de corps plus légers que le liquide, en particulier des granules poreux dont la surface accroche bien les boues et qui flottent librement malgré la charge créée par le fait que ces boues sont plus denses que l'eau, ou sont maintenus entièrement immergés par une grille supérieure. On a enfin proposé de mettre ces granules légers en suspension sous l'effet d'un courant de liquide homogène et descendant, engendré par un ensemble de buses de répartition placées à la partie supérieure de la cuve. Ces garnissages peuvent être utilisés les uns dans des traitements aérobies, les autres dans des traitements anaérobies, essentiellement dans les installations utilisant le procédé de nitrification-dénitrification où les étages tertiaires de dénitrification, qui sont des étages anaérobies ou du moins anoxiques dans lesquels se trouve consommé le seul oxygène des nitrates, traitent des effluents clarifiés.

Mais l'utilisation de lits noyés fixes en vue d'un travail à forte charge volumique dans les traitements de méthanisation, où l'on recherche une circulation relativement lente dans le but de rendre maximale la production de gaz méthane, fait apparaître d'importants risques de colmatage du filtre ainsi constitué. C'est pourquoi l'emploi d'une telle solution n'a été réellement envisagé que dans le deuxième étage d'installations travaillant en deux étapes distinctes.

Or, les lits flottants connus ne se prêtent pas mieux à la fermentation méthanique. En effet, les garnissages utilisés possèdent un pourcentage de vide intergranulaire ou taux de passage libre relativement faible, alors que le processus engendre des boues à la fois épaisses et légères car chargées de gaz, dont la flottabilité élevée ne permet pas non plus la mise en suspension continue, en raison des faibles vitesses de passage requises dans ce cas particulier, et expose en outre à la formation d'une croûte en surface.

Le document "Wasser, Luft und Betrieb", 22, 1978, N°. 11 pages 572-575 décrit un procédé de traitement biologique anaérobie d'effluents liquides performant des polluants organiques à l'aide d'un lit à garnissage du type Flocor. Le réacteur utilisé est un réacteur de laboratoire ayant de faibles dimensions. Le comportement du lit à garnissage et le déroulement du procédé dans un tel réacteur sont différents de ceux obtenus dans des réacteurs industriels et l'enseignement de ce document ne peut donc contribuer à la solution des problèmes techniques apparaissent dans les réacteurs industriels, notamment les problèmes de colmatage du garnissage et de formation d'une croûte en surface.

La présente invention, qui a bénéficié de la collaboration de la station d'oenologie et de technologie végétale de l'Institut National de la Recherche Agronomique de NARBONNE, et particulièrement les travaux de Monsieur Jacques MAUGENET et de ses collaborateurs sur la fermentation méthanique, a pour objet de proposer un procédé et un dispositif permettant, dès la phase initiale du processus de fixer et d'accumuler les micro-organismes, en particulier acidogènes ou méthanogènes, sur un garnissage mobile, autorisant ainsi, sans risque d'engorgement, un travail à charge volumique élevée et conduisant donc à une production de gaz par unité de volume de fermenteur beaucoup plus intense que dans les fermenteurs classiques.

L'invention concerne donc un procédé, un fermenteur industriel et une installation industrielle pour le traitement anaérobie d'effluents liquides renfermant des polluants organiques concentrés, dans lequel la fermentation s'effectue à travers un lit noyé à garnissage de faible densité, libre ou flottant, caractérisé en ce que les éléments du garnissage ont une densité propre supérieure à celle du liquide, toutefois au plus égale à 1,5, mais un pourcentage de vide ou taux de passage libre supérieur à 90% et une surface spécififique utile supérieure à 100 m²/m³ que, l'on admet dans le fermenteur une quantité suffisante de liquide pour recouvrir ledit garnissage lorsqu'il ne flotte pas, qu'il se forme ainsi un garnissage flottant dans ledit liquide et que l'on dispose à la partie supérieure du fermenteur un dispositif permettant l'arrosage dudit garnissage flottant.

Ainsi, selon un premier aspect de l'invention, le fermenteur utilisera un lit constitué d'un garnissage d'éléments indépendants de densité peu supérieure à celle du liquide, possédant un taux de passage libre ou pourcentage de vide élevé et une haute surface spécifique de support des boues, et ne remplissant pas toute l'enceinte, par exemple un lit d'anneaux tels que les anneaux FLOCOR, éléments tubulaires en matière plastique d'une longueur voisine de leur diamètre et de structure annelée pour en augmenter la surface spécifique utile et la rigidité.

Le fort pourcentage de vide de tels éléments limite autant qu'il est possible les risques de colmatage inhérents au procédé utilisé. En outre, ce lit "libre" ou "flottant" est constitué d'un empilage d'éléments reposant librement sur une grille support, et non pas immobilisés entre des parois à l'intérieur de la cuve de traitement. En raison de leur relativement faible densité, ces éléments, une fois qu'ils sont recouverts de boues chargées de bulles gazeuses sous l'effet de la fermentation, seront capables de flotter faiblement et, par conséquent, de se déplacer les uns par rapport aux autres sous l'effet d'efforts limités ou de retomber en cas de ralentissement de la réaction.

Le choix d'un tel type de garnissage en matière plastique de relativement faible densité et celui des conditions de mise en oeuvre qui viennent d'être indiquées permet donc de résoudre les difficultés créées par les risques d'engorgement, sans avoir à jouer sur la vitesse du courant, en utilisant notamment l'effet moteur plus ou moins important produit par les gaz pour détasser périodiquement les différentes zones du lit : les accumulations de gaz éventuelles soulèvent des éléments et modifient leurs positions respectives, les amenant tout à tour dans une orientation de moindre résistance au passage du flux liquide, où le colmatage est très peu à craindre, et détruisent ainsi d'elle-mêmes les agglomérats de boues.

Le cas échéant, l'invention prévoit de superposer dans une même cuve plusieurs étages de lits analogues ayant chacun de préférence une hauteur maximale de 4 m environ.

Selon une autre caractéristique importante, un empilage d'éléments de garnissage reposant du moins au départ sur une grille inférieure dépasse du moins en fonctionnement le niveau libre du liquide, de préférence sur une hauteur de l'ordre de 5 à 10% au plus de la hauteur immergée. Par l'intermédiaire d'une rampe convenable, la partie émergée est soumise à un arrosage sous un débit réglable qui peut atteindre, voire dépasser 5 m³/m²·h. Cet arrosage, obtenu par recyclage du liquide contenu dans la cuve, fournit aussi un moyen commode pour homogénéiser la température de cette dernière et la régler si l'on effectue ce recyclage à travers un échangeur thermique.

Les études effectuées à différents taux d'arrosage sur un tel garnissage à ruissellement non noyé ont montré qu'il retient une quantité d'eau qui augmente avec le débit d'arrosage, et que la couche émergée est ainsi capable de constituer un lest maintenant de garnissage enfoncé dans la cuve, lest que les gaz de fermentation sont cependant capables de soulever de temps à autre, et ceci en particulier dans les zones où apparaît un début d'engorgement, de telle sorte qu'ils retournent et déplacent progressivement une partie ou l'autre des éléments du garnissage de façon à trouver une section de passage maximale, interdisant la formation de croûte en surface.

Une caractéristique de l'invention est donc que le lit flottant est avantageusement lestée à sa partie supérieure par une couche émergée d'éléments de garnissage ; le lit ainsi obtenu étant arrosé de façon à constituer, dans sa partie supérieure émergée, un lit à ruissellement ; dans le cas où cet arrosage est effectué, par recirculation du liquide, avec un débit supérieur au débit d'alimentation, on obtient un moyen commode d'homogénéisation.

Indépendamment de sa valeur de réglage, l'arrosage du lit peut être changé ou interrompu de façon périodique, pour alléger le lest ; il est donc facile de modifier, en particulier par simple arrêt d'une pompe de circulation, le contrepoids opposé à l'effet de flottaison provoqué par le dégagement gazeux et constitué par la partie émergée du garnissage, ce qui soulève de proche en proche les éléments du lit, dont l'empilage se réorganise en brisant les engorgements. Dans le cas où l'on dispose de plusieurs rampes indépendantes, on peut en particulier modifier sa répartition de façon à provoquer une circulation progressive des éléments dans l'appareil. Il en résulte que l'on peut obtenir un rendement de réaction uniforme et maximal dans la totalité du volume de celui-ci sans observer d'engorgement, ce qui en augmente fortement la capacité de traitement.

Comme on le comprend, il peut être avantageux d'interrompre périodiquement l'arrosage du lit.

L'invention concerne également un fermenteur permettant la mise en oeuvre de l'invention. Ce fermenteur est constitué d'un cuve fermée garnie d'un empilage d'éléments (6) en matière plastique, caractérisé en ce que ces éléments possèdent une densité supérieure à celle du liquide, mais au plus égale à 1,5, un pourcetage de vide ou taux de passage libre supérieur à 90% et une surface spécifique utile supérieure à 100%. m2/m3, et reposent librement sur une grille support (5), de sorte qu'ils sont capables de flotter une fois qu'ils sont recouverts de boue.

Lesdits éléments peuvent être empilés en plusieurs étages et le niveau du liquide est avantageusement réglé par un déversoir dont le niveau peut être situé au-dessus de niveau supérieur de l'empilage.

Par ailleurs, le fermenteur comporte une rampe d'arrosage (8), de préférence à débit réglable, placé au-dessus de l'empilage et cette rampe est alimentée au moins partiellement par le liquide contenu dans la cuve ; sur le dispositif de recyclage alimentant ainsi la rampe, on peut avantageusement disposer un régulateur de température (13, 33, 43).

Les autres caractéristiques de l'appareillage apparaîtront dans ce qui suit.

Une application particulière de l'invention au traitement des vinasses résultant de la distillation du vin sera décrite ci-dessous en référence aux dessins, et permettra d'en comprendre entièrement les divers aspects : .

la Figure 1 represente schématiquement un fermenteur conforme à l'invention ;

la figure 2 constitue un schéma d'ensemble de l'installation.

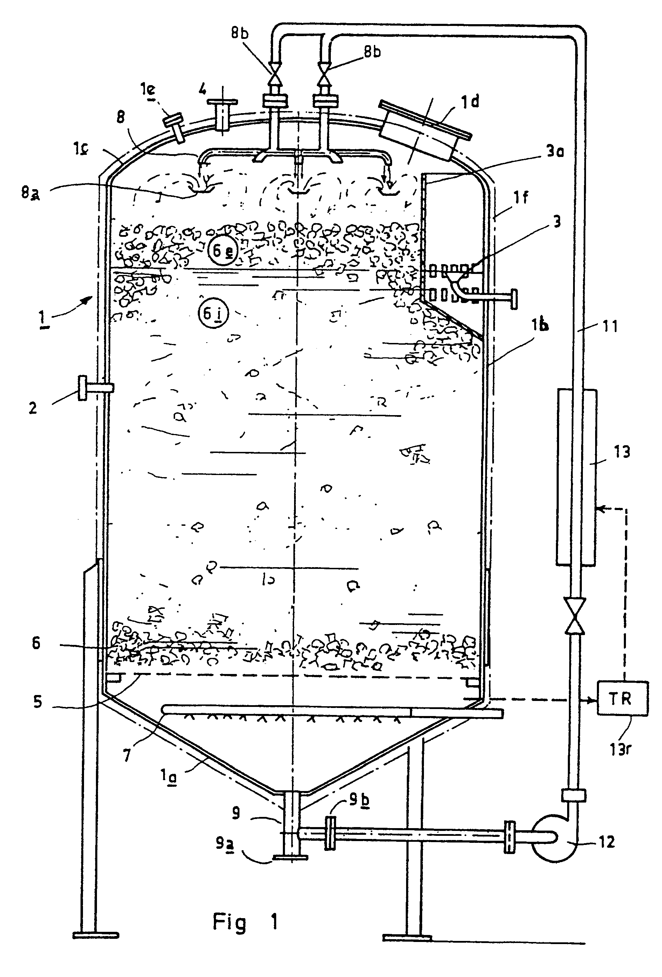

Le fermenteur représenté par la figure 1 est apte à la mise en oeuvre d'une fermentation acidogène comme à celle d'une fermentation méthanogène ou encore, selon les conditions de fonctionnement, d'une double fermentation conduisant directement à l'obtention d'un gaz à haute teneur en méthane.

Il est essentiellement constitué d'une cuve 1 formée d'un fond conique 1a, d'une virole 1b et d'un couvercle étanche 1c portant un trou de visite 1d pour les opérations périodiques d'entretien et une soupape de sécurité ou membrane d'éclatement 1e.

Il est garni d'un revêtement calorifuge 1f destiné à faciliter son maintien à la température de travail désirée. Sa cuve est porteuse d'une ou plusieurs tubulures d'alimentation 2 représentées ici sous forme d'un piquage latéral, mais qui pourraient aussi alimenter un réseau de répartition placé au niveau désiré.

A la partie supérieure de la virole, la cuve est équipée d'un déversoir 3 protégé par une crépine 3a et raccordé à une canalisation d'évacuation non figurée ; ce déversoir fixe le niveau du liquide à l'intérieur de la cuve, dont l'évacuation se fait par débordement. Enfin, l'appareil porte à son sommet une tubulure 4 d'évacuation de gaz de fermentation.

A l'intérieur, une grille 5, posée à la partie inférieure de la virole, supporte un garnissage d'éléments en matière plastique à fort pourcentage de vide, à forte surface spécifique et à faible densité 6, disposés en vrac.

Ce garnissage possédera un pourcentage de vide supérieure à 90% et, de préférence, à 95%, une surface spécifique au moins égale à 100 m2/m3 et, de préférence, supérieure à 200 m2/m3, et sera constitué d'un matériau d'une densité au plus égale à 1,5 ; les exigences d'inaltérabilité en présence de la suspension à traiter et du film biologique ainsi que le besoin d'un bon accrochage de ce film biologique conduisent par exemple au choix d'anneaux nervurés ou annelés en PVC ou en polystyrène, en particulier des anneaux du type connus sous la dénomination FLOCOR R, dont la surface spécifique atteint 230 m2/m3. Il n'occupera pas plus de 90% du volume de l'enceinte. Une fois porteurs de leur film biologique, de tels éléments de garnissage se trouvent en équilibre quasi indifférent dans le milieu liquide ; ils peuvent donc facilement se soulever et se mouvoir sous l'effet de flottation dû au dégagement de gaz provoqué par la fermentation ou, le cas échéant, provoqué par un envoi forcé de gaz à travers une buse 7 placée sous la grille 5, leurs déplacements se trouvant toutefois freinés par la surcharge que la couche émergée 6e crée sur la partie immergée 6i. La couche émergée atteint alors une hauteur suffisamment inférieure à celle de la partie haute de la crépine 3a, tandis que la partie basse 6i du garnissage, immergée sous le niveau du liquide, décolle quelque peu de la grille support.

A la partie supérieure de la cuve sont placées une ou plusieurs rampes d'arrosage 8 éventuellement associées à un dispositif de dispersion 8a. En règle générale, l'arrosage effectué par les rampes 8 s'obtient par recyclage du liquide à traiter à travers une boucle extérieure. Dans ce but, le fond conique 1a porte à son extrémité inférieure un piquage 9 raccordé d'une part, en 9a, à une vanne de purge, mais aussi en 9b, à une canalisation 11 équipée d'un organe de pompage 12 alimentant la rampe 8.

L'arrosage permet de maintenir sur les anneaux de la partie émergée 6e un film biologique en présence duquel, à titre d'exemple, un débit d'arrosage de 4 m³/m² ·h crée une surcharge de l'ordre de 80 à 100 kg/m², sur la partie immergée 6i, dans l'hypothèse où le garnissage est formé d'anneaux FLOCOR R, et que la partie émergée possède une épaisseur de 0,50 m.

Il est à noter qu'il n'est pas indispensable que l'arrosage soit uniformément réparti et qu'une répartition inégale est au contraire susceptible de créer une circulation progressive des anneaux de nature à améliorer la régularité du décolmatage provoqué périodiquement, de place en place, par l'accumulation du gaz dans une zone déterminée du lit, puis le soulèvement des anneaux situés au-dessus.

L'emploi de plusieurs rampes munies de vannes 8b permet précisément de modifier sa répartition.

L'arrosage s'effectue très généralement à un débit nettement supérieur au débit d'alimentation de nature à assurer un taux de recyclage allant jusqu'à 20 et plus, créant donc dans l'appareil une circulation générale de haut en bas accompagnée d'un brassage du liquide. C'est pourquoi la tubulure 2 d'alimentation en liquide à traiter sera commodément placée sur le côté.

Enfin, la canalisation 11 de la boucle de recyclage est munie d'un régulateur de température 13 qui constitue un moyen de commande pour effectuer la mise en régime puis le réglage de la température du fermenteur à la valeur voulue, en profitant de l'homogénéisation créée par le brassage, et ceci de préférence de façon automatique, à l'aide d'un circuit d'asservissement 13r convenable. A titre indicatif, le rendement optimal en méthane s'obtient aux alentours de 35°C.

L'invention concerne également une installation pour le traitement d'effluents liquides et plus particulièrement des vinasses utilisant le procédé selon l'invention. Une telle installation comprendra successivement un étage de fermentation acidogène (30) et un étage fermentation méthanogène (40) à lit flottant; elle peut comporter en outre, pour le traitement des vinasses, une cuve préalable de neutralisation sodique (20) et en fin d'installation un clarificateur à flottation par méthane dissous (50).

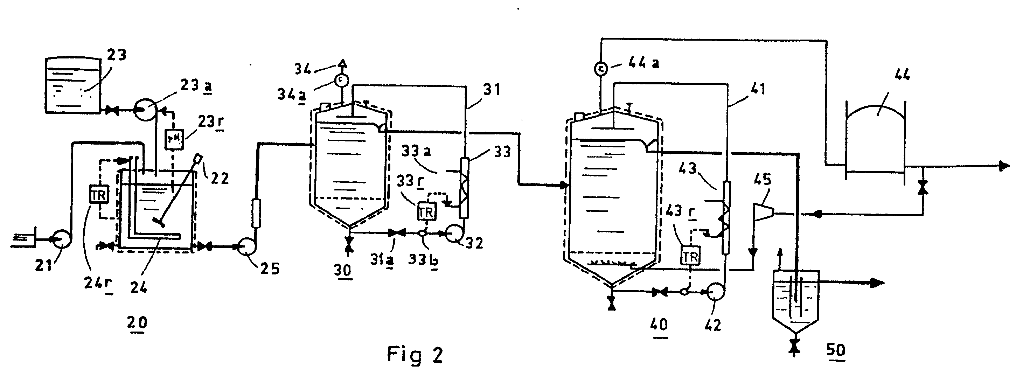

L'installation de traitement des vinasses représentée sur la figure 2 est prévue pour un débit moyen de 5 m³/h, soit 75 kg/h de DBO₅. Elle possède deux étages successifs de fermentation, l'un acidogène, l'autre méthanogène, et comprend essentiellement une cuve de prétraitement 20, deux fermenteurs 30 et 40, un clarificateur 50. Chacun des deux fermenteurs est conforme à la description donnée ci-dessous en liaison avec la figure 1.

A la sortie de la distillerie, les vinasses sont reprises par une pompe de relevage 21, et envoyées vers la cuve 20 qui permet non seulement de les stocker pour régulariser le débit, ou, en cas de besoin, d'effectuer des opérations isolées, telles que des prélèvements, destinés à des mesures et analyses pour la surveillance du processus ou pour des calculs de bilans, mais surtout de les neutraliser. En effet, ces vinasses sont normalement acides, et il est nécessaire de ramener leur pH aux environs de 6,5 pour permettre à la fermentation de progresser convenablement. C'est pourquoi la cuve 20 est munie d'un agitateur 22 et alimentée en lessive alcaline, en principe sodique, à partir d'un réservoir 23, par un organe injecteur 23a asservi à une régulation de pH 23r qui permet d'effectuer la neutralisation en continu. Enfin, la cuve 20 est de préférence calorifugée et pourvue d'un dispositif de chauffage 24 qui permet d'alimenter le premier étage de fermentation en liquide à la température voulue, de l'ordre de 35°C par exemple, grâce à une boucle de régulation 24r, tandis que la température de fermentation proprement dite sera ajustée par le système de régulation propre au fermenteur 30 vers lequel, à la sortie de la cuve 20, les vinasses sont donc envoyées en continu par une pompe doseuse 25. Ce fermenteur 30, d'un volume de 40 m³ et d'une surface de grille de 10 m², est destiné à réaliser l'étape acidogène de la fermentation. L'arrosage et la circulation à l'intérieur sont assurés, à travers la canalisation 31 et sa vanne de réglage 31a par une pompe centrifuge 32 d'un débit nominal de 40 m³/h refoulant au travers d'un échangeur à plaques 33. Une vanne 31a permet de modifier le taux d'arrosage. Le dispositif de chauffage 33a du circuit primaire de l'échangeur est asservi par le circuit de régulation 33r à la lecture d'une sonde thermométrique 33b. Les gaz de fermentation, essentiellement constitués d'anhydride carbonique et d'un peu d'hydrogène, sont évacués vers l'atmosphère par une petite cheminée 34 équipée le cas échéant d'un compteur 34a.

A la sortie du réacteur acidogène 30, les vinasses ayant subi la première étape de fermentation s'écoulent par gravité vers le second étage, destiné à la production du méthane et qui comprend en parallèle deux fermenteurs 40.

Chacun de ces fermenteurs possède un volume de 100 m³ pour une surface de grille de 25 m², mais son mode de fonctionnement est identique à celui du précédent appareil. Le recyclage du liquide est assuré à travers la boucle 41 par une pompe 42 de 100 m³/h, au travers d'un échangeur 43 équipé comme précédemment d'un appareil de régulation de température 43r.

Le gaz de fermentation, constitué essentiellement de méthane à 25% de gaz carbonique et d'azote, est envoyé en très légère surpression vers un gazomètre 44 à travers un compteur 44a. La production obtenue est de l'ordre de 100 m³/h.

Un surpresseur 45 permet, en cas de besoin, d'effectuer une injection de gaz relativement intensive pour le décolmatage.

Les vinasses fermentées, appauvries à 90% au moins de leur carbone organique sont évacuées par gravité vers un clarificateur 50 formant garde hydraulique, qui peut être un décanteur comme sur le schéma ou mieux encore une cellule de flottation étanche, fonctionnant à partir de méthane dissous grâce à un système hydrocompresseur. Une telle cellule permet d'obtenir une séparation plus poussée des matières en suspension et une partie des boues qu'elle élabore, maintenues totalement à l'abri de l'air, peut être lyophilisée en vue de servir à des réensemencements.

A la sortie du clarificateur 50, le liquide épuré à 90% au moins peut être rejeté ou dirigé vers un traitement d'épuration complémentaire, par exemple un traitement biologique aérobie.

## Revendications

1. Procédé de traitement biologique anaérobie d'effluents liquides renfermant des polluants organiques concentrés, dans lequel la fermentation s'effectue à travers un lit noyé à garnissage de faible densité, libre ou flottant, caractérisé en ce que :
— on utilise des éléments de garnissage ayant une densité propre supérieure à celle du liquide, toutefois au plus égale à 1,5 mais un pourcentage de vide ou taux de passage libre supérieur à 90% et une surface spécifique utile supérieure à 100 m²/m³ ;
— lesdits éléments formant un lit qui est mis en flottation par la fermentation des boues, une partie dudit lit étant émergée et une autre partie étant immergée ;
— et que la partie émergée dudit lit est arrosée par un liquide qui est, de préférence, le liquide traité.

2. Procédé selon la revendication 1, caractérisé en ce que l'arrosage du lit est interrompu périodiquement.

3. Fermenteur industriel pour traitement anaérobie, constitué d'une cuve fermée garnie d'un empilage d'éléments (6) en matière plastique, caractérisé en ce que ces éléments possèdent une densité supérieure à celle du liquide mais au plus égale à 1,5, un pourcentage de vide ou taux de passage libre supérieur à 90% et une surface spécifique utile supérieure à 100 m²/m³, et reposent librement sur une grille support (5) de sorte qu'ils sont capables de flotter une fois qu'ils son recouverts de boues, la partie supérieure de l'empilage montant au-dessus du niveau du liquide, ledit fermenteur contenant une quantité suffisante de liquide pour recouvrir ledit garnissage lorsque celui-ci ne flotte pas et comportant en outre à sa partie supérieure une rampe d'arrosage alimentée par un dispositif assurant le recyclage du liquide contenu dans le fermenteur.

4. Installation industrielle pour le traitement d'effluents liquides par fermentation anaérobie selon les revendications 1 et 2, caractérisée en ce qu'elle comprend successivement un étage de fermentation acidogène (30), et un étage de fermentation méthanogène (40) à lit flottant, comprenant des fermenteurs selon la rev. 3.

5. Installation industrielle selon la revendication 4, destinée au traitement des vinasses de distillation et comprenant successivement une cuve de neutralisation sodique (20), un fermenteur acidogène à température régulée (30), un fermenteur méthanogène à température régulée (40) et un clarificateur à flottation par méthane dissous (50).

## Ansprüche

1. Verfahren zur anaeroben biologischen Aufbereitung von konzentrierte organische Schadstoffe enthaltenden Abwässern, bei welchem die Gärung durch ein Flutbett mit Packung geringer Dichte, das frei oder schwebend ist, erfolgt, dadurch gekennzeichnet, dass :
— die Elemente der Packung eine Eigendichte höher als jene der Flüssigkeit, jedoch höchstens gleich 1,5, aber einen Hohlstellenanteil oder freie Durchflussrate von mehr als 90% und eine spezifische Nutzfläche von mehr als 100 m²/m³ haben ;
— die genannten Elemente ein Bett bilden, das durch die Gärungsschlämme Schwimmfähigkeit erhält, wobei ein Teil des genannten Betts herausgetaucht und ein Teil eingetaucht ist ;
— und dass der heraustauchende Teil des genannten Betts mit einer Flüssigkeit berieselt wird, die vozugsweise die behandelte Flüssigkeit ist.

2. Verfahren nach Anspruch 1, dadurch gekennzeichnet, dass die Berieselung des Betts in regelmässigen Abständen unterbrochen wird

3. Industrieller Gärapparat zur anaeroben Behandlung, bestehend aus einem geschlossenen, mit einem Stapel von Elementen (6) aus Plastikmaterial versehenen Behälter, dadurch gekennzeichnet, dass diese Elemente eine Dichte höher als jene der Flüssigkeit, aber höchstens gleich 1,5, einen Hohlstellenanteil oder freie Durchflussrate von mehr als 90% und eine spezifische Nutzfläche von mehr als 100 m²/m³ besitzen und frei auf einem Stützrost (5) ruhen, so dass sie schweben können, sobald sie von Schlamm bedeckt sind, wobei der obere Teil des Stapels über den Flüssigkeitsspiegel steigt, und wobei der genannte Gärapparat eine genügende Menge an Flüssigkeit enthält, um die genannte Packung zu bedecken, wenn diese nicht schwimmt, und ausserdem an seinem oberen Teil eine Berieselungsrampe aufweist, die durch eine Vorrichtung zum Rückführen der im Gärapparat enthaltenen Flüssigkeit gespeist ist.

4. Industrielle Vorrichtung zur Aufbereitung von Abwässern durch anaerobe Gärung nach den Ansprüchen 1 und 2, dadurch gekennzeichnet, dass sie aufeinanderfolgend eine Stufe säurebildender Gärung (30) und eine Stufe Methangärung (40) mit Schwebebett umfasst und Gärapparate nach Anspruch 3 aufweist.

5. Industrielle Vorrichtung nach Anspruch 4 zur Aufbereitung von Destillationsschlempen, die der Reihe nach einen Laugenneutralisationsbehälter (20), einen temperaturgeregelten Methangärapparat (40) und einen Klärbehälter (50) mit Flotation durch gelöstes Methan umfasst.

ing bed, comprising fermentors according to claim 3.

5. Industrial installation according to claim 4, designed for the treatment of distiller's wash and comprising successively a sodium neutralization tank (20), an acidogenic fermentor with regulated temperature (30), a methanogenic fermentor with regulated temperature (40) and a flotation clarifier by solute methane (50).

## Claims

1. Process for the biological anaerobic treatment of liquid effluents containing concentrated organic pollutants, in which fermentation is carried out through an immersed bed with a low density filling, free or floating, characterized in that :
  – the elements of the filling have a proper density higher than that of the liquid, although at the most equal to 1.5, but a vacuum percentage or free passage rate higher than 90% and a specific useful surface greater than 100 $m^2/m^3$ ;
  – the said elements form a bed which is caused to float by the fermentation sludges, one part of the said bed emerging and another part being immersed ;
  – and that the emerged part of the said bed is watered by a liquid which is, preferably, the treated liquid.

2. Process according to claim 1, characterized in that the watering of the bed is interrupted periodically.

3. Industrial fermentor for anaerobic treatment, constituted of a closed tank filled with a stack of elements (6) of plastic material, characterized in that these elements have a density higher than that of the liquid but at the most equal to 1.5, a vacuum percentage or free passage rate higher than 90% and a specific useful surface greater than 100 $m^2/m^3$, and freely rest on a support grid (5) so that they can float once covered with sludge, the upper part of the stack rising above the level of the liquid, said fermentor containing a sufficient quantity of liquid for covering the said filling when the latter does not float and comprising, moreover, at its upper part a watering ramp fed by a device ensuring the recycling of the liquid contained in the fermentor.

4. Industrial installation for the treatment of liquid effluents by anaerobic fermentation according to claims 1 and 2, characterized in that it comprises successively a stage of acidogenic fermentation (30), and a stage of methanogenic fermentation (40) with float-

Fig 1

Fig 2

9